# EUROPEAN PATENT APPLICATION

(11) **EP 4 810 189 A1**
(43) Date of publication of application: **23.09.2026**
(21) Application number: 24891425.1
(22) Date of filing: 13.11.2024
(51) Int. Cl.: B23K 26/36, B23K 26/21, B23K 26/38, B23K 26/082

(54) **SHEET METAL WELDING METHOD, PROCESSING PROGRAM CREATION METHOD, AND PROCESSING PROGRAM CREATION DEVICE**

(30) Priority: 13.11.2023 JP 2023192863; 11.10.2024 JP 2024178839
(71) Applicant: Amada Co., Ltd., Isehara-shi, Kanagawa 259-1196 (JP)
(72) Inventor: NOZAWA, Kai, Isehara-shi, Kanagawa 259-1196 (JP); ETO, Arisa, Isehara-shi, Kanagawa 259-1196 (JP)
(74) Representative: Grünecker Patent- und Rechtsanwälte PartG mbB
(86) International application number: PCT/JP2024/040292
(87) International publication number: WO 2025/105389

(57) **Abstract**

A sheet metal welding method comprises: acquiring a processing program for cutting out and welding a sheet metal from a base material on which a plating layer has been formed; acquiring cutting positions for cutting the sheet metal from the acquired processing program; identifying, from among the acquired cutting positions, a welding cutting position that is a cutting position to be welded; setting, on both sides of the identified welding cutting position, an irradiation region where a laser beam is irradiated from a laser processing machine (100); removing the plating layer by irradiating the set irradiation region with the laser beam; cutting out the sheet metal from the base material by irradiating the cutting positions with the laser beam, and welding the cut-out sheet metal.

## Description

### [TECHNICAL FIELD]

The present disclosure relates to a sheet metal welding method, a processing program creation method, and a processing program creation device.

### [BACKGROUND ART]

Patent Literature 1 discloses a laser cutting method for cutting a plated steel sheet with a laser beam. In the laser cutting method disclosed in Patent Literature 1, a plating layer-containing metal melted by irradiation of the laser beam is caused to flow onto a cut surface of the plated steel sheet.

### [CITATION LIST]

### [PATENT LITERATURE]

[Patent Literature 1] Japanese Unexamined Patent Publication No. 2019-69457

### [SUMMARY OF INVENTION]

However, in the conventional laser cutting method described above, since the melted plating layer-containing metal is caused to flow onto the cut surface, when the cut surface onto which the plating layer-containing metal has flowed is welded, welding quality deteriorates, leaving room for improvement.

A first aspect of one or more embodiments is a sheet metal welding method including: acquiring a processing program for cutting out and welding a sheet metal from a base material on which a plating layer has been formed; acquiring cutting positions for cutting the sheet metal from the acquired processing program; identifying, from among the acquired cutting positions, a welding cutting position that is a cutting position to be welded; setting, on both sides of the identified welding cutting position, an irradiation region where a laser beam is irradiated from a laser processing machine; removing the plating layer by irradiating the set irradiation region with the laser beam; cutting out the sheet metal from the base material by irradiating the cutting positions with the laser beam; and welding the cut-out sheet metal.

A second aspect of one or more embodiments is a processing program creation method including: acquiring design data of a product formed of a sheet metal cut out from a base material on which a plating layer has been formed; identifying, from among edge portions of the product, a welding edge portion to be welded based on the design data; setting, in contact with cut surfaces of a plurality of the sheet metals joined at the identified welding edge portion, a plating removal region for removing the plating layer; generating a development drawing of the sheet metal with the plating removal region set therein; and creating a processing program for cutting out and welding the sheet metal from the base material based on the generated development drawing.

A third aspect of one or more embodiments is a processing program creation device configured to: acquire design data of a product formed of a sheet metal cut out from a base material on which a plating layer has been formed; identify, from among edge portions of the product, a welding edge portion to be welded based on the design data; set, in contact with cut surfaces of a plurality of the sheet metals joined at the identified welding edge portion, a plating removal region for removing the plating layer; generate a development drawing of the sheet metal with the plating removal region set therein; and create a processing program for cutting out and welding the sheet metal from the base material based on the generated development drawing.

With the sheet metal welding method according to one or more embodiments, since the plating layers on both sides of the cutting position to be welded are removed in advance, it is possible to prevent metal components of the plating layer melted at the time of cutting from flowing onto the cut surface. Therefore, even when a plated steel sheet is cut and cut surfaces are welded, welding quality can be improved.

With the sheet metal welding method according to one or more embodiments, even when a plated steel sheet is cut and cut surfaces are welded, welding quality can be improved.

### [BRIEF DESCRIPTION OF DRAWINGS]

[FIG. 1] FIG. 1 is a diagram illustrating the overall configuration of a laser processing machine used in a sheet metal welding method according to a first embodiment.
[FIG. 2] FIG. 2 is a perspective view illustrating a detailed configuration of a collimator unit and a processing head of the laser processing machine used in the sheet metal welding method according to the first embodiment.
[FIG. 3] FIG. 3 is a diagram for explaining displacement of an irradiation position of a laser beam on a sheet metal by a beam vibration mechanism.
[FIG. 4] FIG. 4 is a flowchart illustrating a processing procedure of sheet metal welding processing according to the first embodiment.
[FIG. 5] FIG. 5 is a diagram for explaining a method of removing a plating layer of a sheet metal by the sheet metal welding method according to the first embodiment.
[FIG. 6] FIG. 6 is a diagram illustrating an example of sheet metal welding by the sheet metal welding method according to the first embodiment.
[FIG. 7] FIG. 7 is a diagram illustrating an enlarged top view of welding portions of a sheet metal by the sheet metal welding method according to the first embodiment.
[FIG. 8] FIG. 8 is a diagram for explaining a method of removing a plating layer of a sheet metal by the sheet metal welding method according to the first embodiment.
[FIG. 9] FIG. 9 is a diagram for explaining a method of vibrating a laser beam of the laser processing machine used in the sheet metal welding method according to the first embodiment.
[FIG. 10] FIG. 10 is a diagram for explaining a method of vibrating a laser beam of the laser processing machine used in the sheet metal welding method according to the first embodiment.
[FIG. 11] FIG. 11 is a diagram for explaining a method of aligning sheet metals by the sheet metal welding method according to the first embodiment.
[FIG. 12] FIG. 12 is a diagram illustrating an overall configuration of a laser processing machine used in a processing program creation method according to a second embodiment.
[FIG. 13] FIG. 13 is a flowchart illustrating a processing procedure of a processing program creation process according to the second embodiment.
[FIG. 14] FIG. 14 is a diagram illustrating an example of a display screen displayed on a processing program creation device according to the second embodiment.
[FIG. 15] FIG. 15 is a diagram illustrating a joined state of sheet metals in a case of a flush corner joint.
[FIG. 16] FIG. 16 is a diagram illustrating a joined state of sheet metals in a case of a half-open corner joint.
[FIG. 17] FIG. 17 is a diagram illustrating an example of a 3D model displayed on the processing program creation device according to the second embodiment.
[FIG. 18] FIG. 18 is a diagram illustrating an example of a 3D model displayed on the processing program creation device according to the second embodiment.
[FIG. 19] FIG. 19 is a diagram illustrating an example of a development drawing generated by the processing program creation device according to the second embodiment.

### [DESCRIPTION OF EMBODIMENTS]

### [First Embodiment]

Hereinafter, a sheet metal welding method according to a first embodiment will be described with reference to the drawings. A sheet metal welding method according to the first embodiment includes acquiring a processing program for cutting out and welding a sheet metal from a base material on which a plating layer has been formed; acquiring cutting positions for cutting the sheet metal from the acquired processing program; identifying, from among the acquired cutting positions, a welding cutting position that is a cutting position to be welded; setting, on both sides of the identified welding cutting position, an irradiation region where a laser beam is irradiated from a laser processing machine; removing the plating layer by irradiating the set irradiation region with the laser beam; cutting out the sheet metal from the base material by irradiating the cutting positions with the laser beam; and welding the cut-out sheet metal.

### [Configuration of Laser Processing Machine]

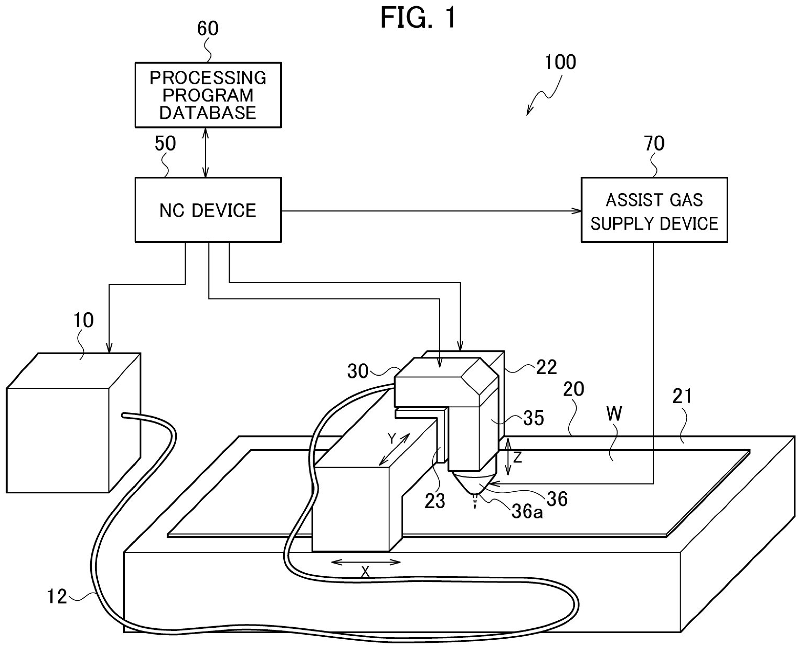

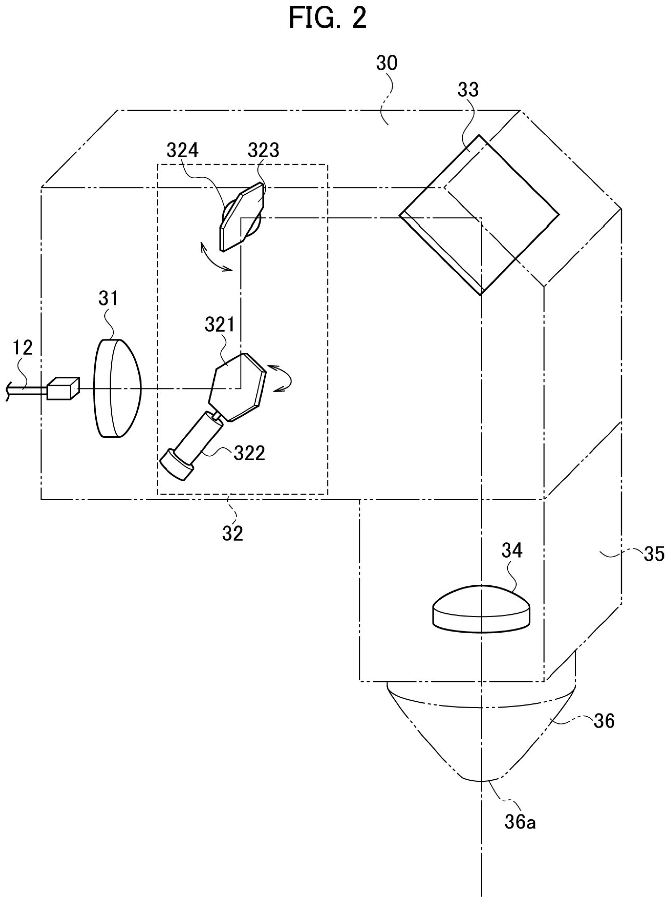

FIG. 1 is a diagram illustrating an overall configuration of a laser processing machine used in the sheet metal welding method according to the first embodiment, and FIG. 2 is a perspective view illustrating a detailed configuration of a collimator unit and a processing head of the laser processing machine. In FIG. 1, a laser processing machine 100 includes a laser oscillator 10 that generates and emits a laser beam, a laser processing unit 20, and a process fiber 12 that transmits the laser beam emitted from the laser oscillator 10 to the laser processing unit 20. Note that the process fiber 12 may be single-core or multi-clad, and an optical coupler may be present on a transmission path to the laser processing unit 20.

The laser processing machine 100 includes an NC (numerical control) device 50, a processing program database 60, and an assist gas supply device 70. The NC device 50 is an example of a control device that controls each part of the laser processing machine 100. The processing program database 60 may be a component external to the laser processing machine 100. In this case, the processing program database 60 may be connected to the laser processing machine 100 via a network.

As the laser oscillator 10, a laser oscillator that amplifies excitation light emitted from a laser diode to emit a laser beam of a predetermined wavelength, or a laser oscillator that directly utilizes a laser beam emitted from a laser diode is suitable. The laser oscillator 10 is, for example, a solid-state laser oscillator, a fiber laser oscillator, a disk laser oscillator, or a direct diode laser oscillator (DDL oscillator).

The laser processing unit 20 includes a processing table 21 on which a sheet metal W serving as a base material to be processed is placed, and a processing head 35 with a nozzle 36 attached to its tip for emitting a laser beam onto the sheet metal W through a circular opening 36a. Further, the laser processing unit 20 includes a gate-type X-axis carriage 22 and a Y-axis carriage 23 for moving the processing head 35 to a processing position, and the processing head 35 is connected to a collimator unit 30 fixed to the Y-axis carriage 23.

The X-axis carriage 22 is configured to be movable on the processing table 21 in an X-axis direction. The Y-axis carriage 23 is configured to be movable on the X-axis carriage 22 in a Y-axis direction perpendicular to the X-axis. The X-axis carriage 22 and the Y-axis carriage 23 function as a movement mechanism that moves the collimator unit 30 and the processing head 35 along a surface of the sheet metal W in the X-axis direction, the Y-axis direction, or any combined direction of the X-axis and the Y-axis.

Instead of moving the collimator unit 30 and the processing head 35 along the surface of the sheet metal W, the collimator unit 30 and the processing head 35 may be fixed in position and the sheet metal W may be configured to move. The laser processing machine 100 only needs to be provided with a movement mechanism that moves the relative position of the collimator unit 30 and the processing head 35 with respect to the surface of the sheet metal W.

The NC device 50 controls the X-axis carriage 22 and the Y-axis carriage 23 so that the processing head 35 moves along the surface of the sheet metal W, and can vibrate the laser beam in a predetermined direction on the surface of the sheet metal W. Furthermore, the NC device 50 can vibrate a beam spot formed on the surface of the sheet metal W by vibrating the laser beam. As a result, the NC device 50 controls the laser processing machine 100 to irradiate the sheet metal W with a laser beam to remove the plating layer formed on the sheet metal W and to cut the sheet metal W.

The NC device 50 is configured by a computer having a memory, a processor such as a CPU (Central Processing Unit), and various interfaces. The memory and the various interfaces are connected to the processor via a bus. By executing a program stored in the memory by the processor, the NC device 50 executes a process of irradiating a laser beam to remove the plating layer and cutting the sheet metal W.

The processing program database 60 stores a processing program for cutting out and welding a sheet metal from a base material on which a plating layer has been formed. The processing program database 60 also stores information for controlling the removal of the plating layer and the cutting of the sheet metal by the laser processing machine 100. The NC device 50 executes control for reading the processing program from the processing program database 60 and vibrating a beam spot on the surface of the sheet metal W, and control for moving the processing head 35 along the surface of the sheet metal W.

The assist gas supply device 70 supplies assist gas to the processing head 35 during processing of the sheet metal W. When the sheet metal W to be processed is an iron-based material, the assist gas supply device 70 can use oxygen, nitrogen, or air as the assist gas. The assist gas supplied to the processing head 35 is blown from the opening 36a in a direction perpendicular to the sheet metal W. The assist gas discharges molten metal from the sheet metal W.

As illustrated in FIG. 2, the collimator unit 30 includes a collimating lens 31 that converts a divergent light laser beam emitted from the process fiber 12 into parallel light (collimated light). The collimator unit 30 also includes a galvano scanner unit 32 and a bend mirror 33 that reflects the laser beam emitted from the galvano scanner unit 32 downward in a Z-axis direction perpendicular to the X-axis and the Y-axis.

The processing head 35 includes a focusing lens 34 that focuses the laser beam reflected by the bend mirror 33 and irradiates the sheet metal W with the laser beam. Note that the divergent light laser beam emitted from the process fiber 12 travels so that the center of an optical axis of the laser beam is located at the center of the collimating lens 31.

The laser processing machine 100 is centered so that the laser beam emitted from the opening 36a of the nozzle 36 is located at the center of the opening 36a. In the reference state, the laser beam is emitted from the center of the opening 36a. The galvano scanner unit 32 functions as a beam vibration mechanism that vibrates the laser beam that travels inside the processing head 35 and is emitted from the opening 36a, within the opening 36a. How the galvano scanner unit 32 vibrates the laser beam will be described below.

The galvano scanner unit 32 includes a scan mirror 321 that reflects the laser beam emitted from the collimating lens 31, and a drive unit 322 that rotates the scan mirror 321 to a predetermined angle. The galvano scanner unit 32 also has a scan mirror 323 that reflects the laser beam emitted from the scan mirror 321, and a drive unit 324 that rotates the scan mirror 323 to a predetermined angle. The scan mirror 321 and the scan mirror 323 are installed to rotate in different directions.

The drive units 322 and 324 can set the scan mirrors 321 and 323, respectively, to predetermined angles based on control by the NC device 50. The drive units 322 and 324 can also reciprocally vibrate the scan mirrors 321 and 323 within a predetermined angular range.

The galvano scanner unit 32 can move the beam spot of the laser beam irradiated onto the sheet metal W by changing the angle of either one or both of the scan mirror 321 and the scan mirror 323. The galvano scanner unit 32 can also vibrate the beam spot of the laser beam by reciprocally vibrating either one or both of the scan mirror 321 and the scan mirror 323. Note that the galvano scanner unit 32 is an example of a beam vibration mechanism, and the beam vibration mechanism is not limited to the galvano scanner unit 32 having a pair of scan mirrors.

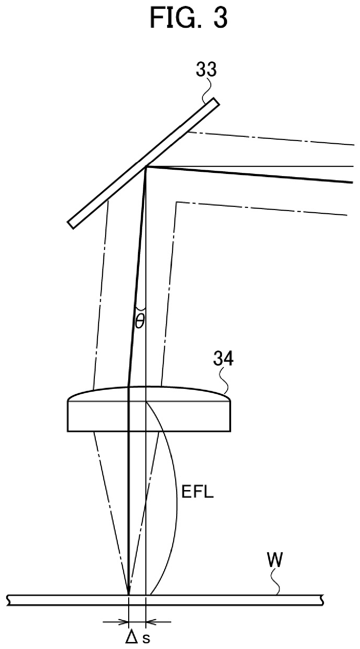

FIG. 3 is a diagram for explaining displacement of the irradiation position of a laser beam on the sheet metal W by the galvano scanner unit 32. Here, either one or both of the scan mirror 321 and the scan mirror 323 are tilted, showing a state where the position of the laser beam irradiated onto the sheet metal W is displaced. In FIG. 3, a thin solid line that is bent by the bend mirror 33 and passes through the focusing lens 34 indicates the optical axis of the laser beam when the laser processing machine 100 is in the reference state.

In detail, due to operation of the galvano scanner unit 32 located in front of the bend mirror 33, the angle of the optical axis of the laser beam entering the bend mirror 33 varies, and the optical axis deviates from the center of the bend mirror 33. In FIG. 3, for simplification, the incident position of the laser beam on the bend mirror 33 is illustrated as the same position before and after the operation of the galvano scanner unit 32.

Assume that the optical axis of the laser beam is displaced from the position indicated by the thin solid line to the position indicated by the thick solid line due to the action of the galvano scanner unit 32. If the laser beam reflected by the bend mirror 33 is inclined at an angle θ, the irradiation position of the laser beam on the sheet metal W is displaced by a distance Δs. If the focal length of the focusing lens 34 is EFL (Effective Focal Length), the distance Δs is calculated as EFL × sinθ.

If the galvano scanner unit 32 tilts the laser beam by angle θ in the direction opposite to that illustrated in FIG. 3, the irradiation position of the laser beam on the sheet metal W is displaced by distance Δs in the direction opposite to that illustrated in FIG. 3. The distance Δs is a distance less than a radius of the opening 36a, and preferably is a distance not exceeding the maximum distance when the maximum distance is set to a distance obtained by subtracting a predetermined margin length from the radius of the opening 36a.

### [Sheet Metal Welding Method]

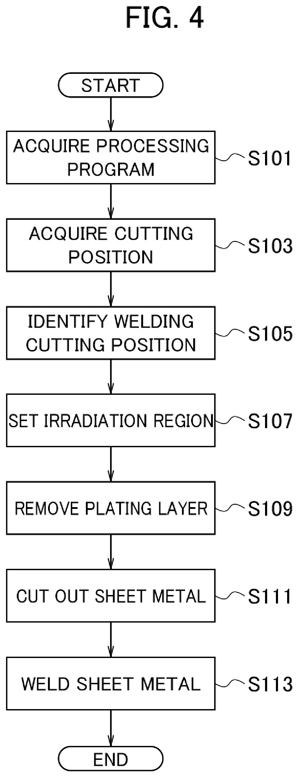

Hereinafter, with reference to FIG. 4, the sheet metal welding method according to the first embodiment will be described. FIG. 4 is a flowchart illustrating a processing procedure of the sheet metal welding process. As illustrated in FIG. 4, in step S101, the NC device 50 acquires a processing program from the processing program database 60. This processing program records processing for cutting out and welding a sheet metal from a base material on which a plating layer has been formed.

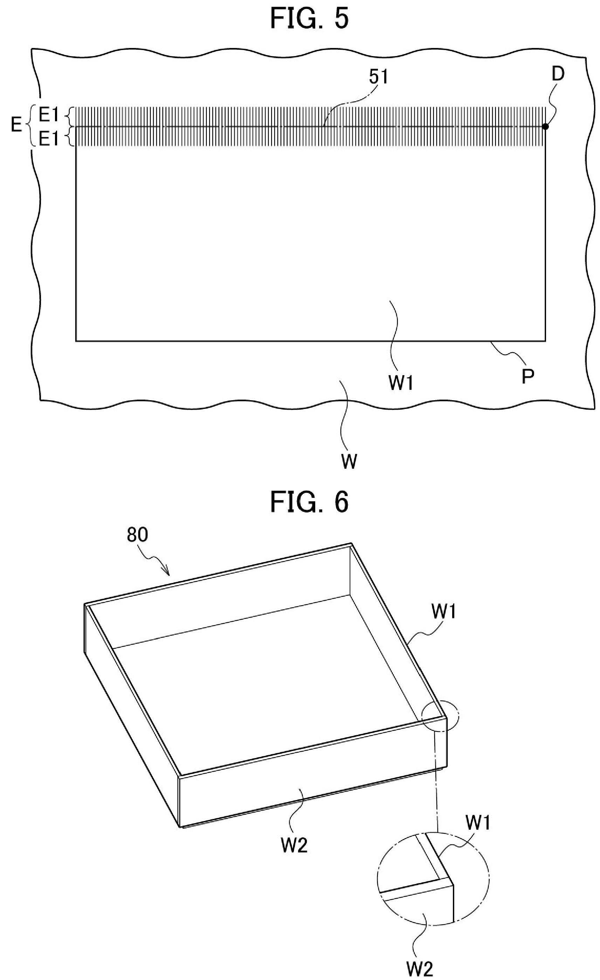

In step S103, the NC device 50 acquires cutting positions for cutting the sheet metal W from the processing program acquired in step S101. For example, as illustrated in FIG. 5, when cutting out sheet metal W1 from the sheet metal W serving as the base material, the NC device 50 acquires the positions of the four sides forming the outer periphery of the sheet metal W1 as cutting positions P.

In step S105, the NC device 50 identifies, from among the cutting positions P acquired in step S103, a welding cutting position that is a cutting position to be welded. In the example illustrated in FIG. 5, the NC device 50 refers to the processing program, and identifies, from among the cutting positions P of the four sides forming the outer periphery of the sheet metal W1 to be cut out, a welding cutting position 51 as the cutting position to be welded.

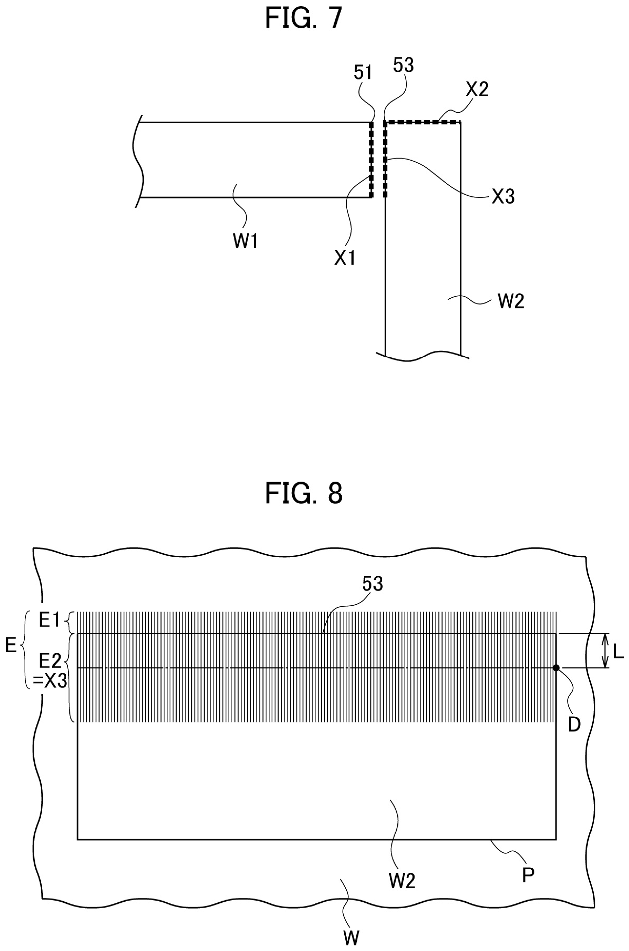

In step S107, the NC device 50 sets, on both sides of the welding cutting position identified in step S105, an irradiation region where a laser beam is irradiated from the laser processing machine 100. For example, as illustrated in FIG. 6, a case of forming side faces of a box 80 by flush corner joint welding the sheet metal W1 and a sheet metal W2 will be described. An enlarged top view of the welding portions in this case is illustrated in FIG. 7.

In FIG. 7, a space is provided between a cut surface X1 and the sheet metal W2 for ease of viewing, but as illustrated in FIG. 7, in the sheet metal W1, the cut surface X1 cut at the welding cutting position 51 is welded to the sheet metal W2. Therefore, in the sheet metal W1, it is necessary to prevent metal components of the plating layer from flowing onto the cut surface X1 of the welding cutting position 51. Therefore, as illustrated in FIG. 5, the NC device 50 sets an irradiation region E1 of a predetermined width on both sides of the welding cutting position 51. Then, the plating layer of the irradiation region E1 is removed, so that, even if the cut is made at the welding cutting position 51, the metal components of the plating layer will no longer flow onto the cut surface X1.

At this point, the predetermined width of the irradiation region E1 is set to be equal to or greater than the beam diameter of the laser beam during laser cutting. For example, when the beam diameter correction amount is set to 0.08 mm to 0.10 mm under cutting conditions for a plate thickness of a target base material, the beam diameter can be expected to be 0.20 mm at maximum. Therefore, the predetermined width serving as the width of the irradiation region E1 is set to 0.20 mm or more, which is the beam diameter.

However, for the sheet metal W2 illustrated in FIG. 7, it is necessary not only to prevent the metal components of the plating layer from flowing onto a cut surface X2 cut at a welding cutting position 53, but also to remove the plating layer in a welding range X3 of the sheet metal W2 to which the cut surface X1 is welded. Therefore, a case of setting an irradiation region for such a sheet metal W2 will be described with reference to FIG. 8. FIG. 8 is a diagram explaining a case of cutting out sheet metal W2 from the sheet metal W serving as the base material.

As illustrated in FIG. 8, in the case of the sheet metal W2, when the welding cutting position 53 is identified, the NC device 50 acquires the position of the welding range X3 from the processing program. Here, the welding range X3 to which the cut surface X1 illustrated in FIG. 7 is welded is in contact with the welding cutting position 53 as illustrated in FIG. 8. Therefore, the NC device 50 sets the welding range X3 in contact with the welding cutting position 53 as an irradiation region E2.

However, when cut at the welding cutting position 53, the cut surface X2 of FIG. 7 is obtained. Therefore, as illustrated in FIG. 8, the NC device 50 sets the irradiation region E1 of a predetermined width on the opposite side of the welding cutting position 53 from the welding range X3.

Therefore, the NC device 50 acquires, from the processing program, the welding range X3 in contact with the welding cutting position 53 and where welding is performed on the surface of the sheet metal W2, sets the irradiation region E2 in the acquired welding range X3, and sets the irradiation region E1 of a predetermined width on the opposite side of the welding cutting position 53 from the welding range X3. In this way, the NC device 50 sets the irradiation regions E1 and E2 for the sheet metal W2.

In step S109, the NC device 50 irradiates the irradiation region set in step S107 with a laser beam to remove the plating layer. Specifically, in the case of the sheet metal W1 illustrated in FIG. 5, the NC device 50 irradiates the irradiation region E1 on both sides of the welding cutting position 51 with a laser beam to remove the plating layer. Further, in the case of the sheet metal W2 illustrated in FIG. 8, the NC device 50 irradiates the irradiation regions E1 and E2 in contact with the welding cutting position 53 with a laser beam to remove the plating layer.

In this case, the NC device 50 acquires processing conditions from the processing program database 60 and removes the plating layer under the acquired processing conditions. In general, to remove a zinc plating layer, scraping off up to 50 µm from the material surface is necessary, so that output needs to be higher compared to laser marking or the like, and pressure of the assist gas also needs to be higher.

For example, in the processing conditions, the moving speed of the laser beam is set to 5000 to 10000 mm/min, the output is set to 700 to 1600 W, the assist gas pressure is set to 0.5 to 0.8 MPa, and the gap between the sheet metal W and the tip of the nozzle 36 is set to 5 mm or more. Further, an inert gas is used as the assist gas to prevent oxidation of a portion from which the plating layer has been removed.

The processing conditions are set according to the material of the sheet metal W. For example, when the sheet metal W is a high corrosion-resistant plated steel sheet, in removing the plating layer of sheet metal W1, the moving speed of the laser beam is set to 10000 mm/min, the output is set to 700 W, and the assist gas pressure is set to 0.8 MPa. In removing the plating layer of sheet metal W2, the moving speed of the laser beam is set to 5000 mm/min, the output is set to 1600 W, and the assist gas pressure is set to 0.8 MPa.

When removing the plating layer, the NC device 50 controls the drive units 322 and 324 of the galvano scanner unit 32 to vibrate the laser beam at a predetermined vibration width, and vibrates the beam spot on the surface of the sheet metal W.

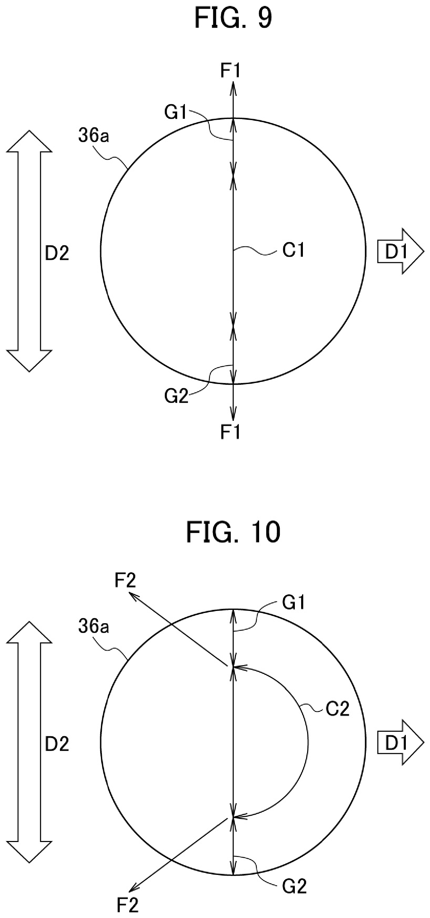

FIG. 9 is a diagram for explaining the vibration method of the laser beam. As illustrated in FIG. 9, the vibration width of the laser beam has a maximum vibration width of C1, which is the diameter of the opening 36a minus a predetermined margin length (G1 + G2). Therefore, the NC device 50 vibrates the laser beam within a range not exceeding the maximum vibration width C1.

The NC device 50 also removes the plating layer by vibrating the laser beam in a direction D2 perpendicular to a traveling direction D1 of the laser beam. As a result, metal components of the removed plating layer are blown off in a direction F1. In this way, in the case of FIG. 9, the plating layer is removed by vibrating the laser beam at a predetermined vibration width and vibrating the beam spot formed on the surface of the sheet metal W in the direction D2 perpendicular to the traveling direction D1 of the laser beam.

It is also possible to vary the vibration direction of the laser beam. For example, as illustrated in FIG. 10, the beam spot may be vibrated to draw a semicircle C2 in the traveling direction D1 of the laser beam. That is, in the case of FIG. 10, the plating layer is removed by vibrating the laser beam at a predetermined vibration width, and vibrating the beam spot formed on the surface of the sheet metal W to draw a semicircle C2 in the traveling direction D1 of the laser beam.

In this case, the metal components of the removed plating layer are blown off in a direction F2. Therefore, since the metal components of the removed plating layer are blown off rearward with respect to the traveling direction D1 of the laser beam, the adhering amount of metal components can be reduced compared to the case of FIG. 9. For example, the adhesion rate of metal components to the sheet metal surface (volume of adhered metal components / volume of removed metal components) is 20% in the case of FIG. 9, whereas this rate decreases to 14% in the case of FIG. 10.

Furthermore, when executing the process of removing the plating layer, the NC device 50 first sets a vibration center. For example, in the case illustrated in FIG. 5, the NC device 50 sets a vibration center D at the same position as the welding cutting position 51. The NC device 50 then sets the laser beam to vibrate by the same width as the irradiation region E1 from the vibration center D. As a result, the plating layer in the region of vibration width E (2 × E1) centered on the vibration center D is removed. For example, when the width of the irradiation region E1 is 0.20 mm, the vibration width E is 0.40 mm.

Further, in the case of FIG. 8, the NC device 50 sets the vibration center D at a position that is a distance L away from the welding cutting position 53. For example, when the width of the irradiation region E1 is 0.20 mm and the plate thickness of the sheet metal W1 is 2.30 mm, the width of the irradiation region E2 is 2.30 mm. In this case, the distance L can be calculated by a formula L = (E1 + E2)/2 - E1 = (E2 - E1)/2, so L = 1.05 mm is obtained.

When the vibration center D is set at the calculated distance L, the NC device 50 sets the laser beam to vibrate by a width of (E1 + E2)/2 from the vibration center D. As a result, the plating layer in the region of vibration width E (E1 + E2) centered on the vibration center D is removed. For example, when the width of the irradiation region E1 is 0.20 mm and the width of the irradiation region E2 is 2.30 mm, the vibration width E is 2.50 mm. In this way, the NC device 50 executes the process of removing the plating layer.

In step S111, the NC device 50 controls the sheet metal W serving as the base material to be cut out into sheet metals W1 and W2 by irradiating the cutting position P with a laser beam. Specifically, in the case of FIG. 5, the NC device 50 irradiates the cutting position P forming the outer periphery of the sheet metal W1 with a laser beam, cuts the sheet metal W1, and cuts out the sheet metal W1 from the sheet metal W. Similarly, in the case of FIG. 8, the NC device 50 irradiates the cutting position P forming the outer periphery of the sheet metal W2 with a laser beam, cuts the sheet metal W2, and cuts out the sheet metal W2 from the sheet metal W.

In step S113, the sheet metals cut out in step S111 are welded. Specifically, as illustrated in FIG. 6, the cut-out sheet metals W1 and W2 are butted together and welded using a laser welding machine (not illustrated) to create a box 80. The laser welding machine for welding the sheet metals W1 and W2 may be any existing laser welding machine in a robot type, a handy type or the like.

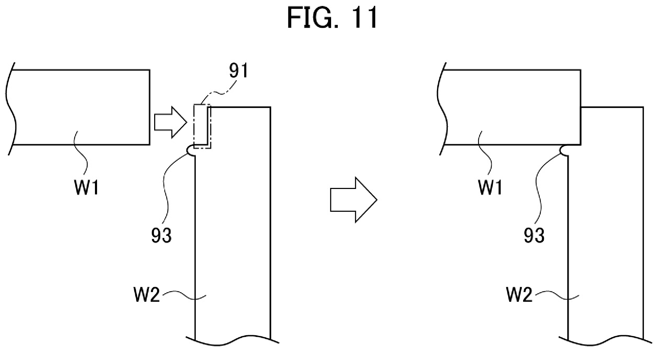

At this time, as illustrated in FIG. 11, when the plating layer in the welding range 91 where the sheet metal W1 is to be welded is removed, protrusions 93 are formed around the welding range 91 from the metal components of the removed plating layer. The protrusions 93, which have a height of approximately 100 µm, can be used for alignment when butting the sheet metal W1 and the sheet metal W2.

Therefore, the laser processing machine 100 irradiates the irradiation region set in the welding range 91 with a laser beam to remove the plating layer, and forms the protrusions 93 around the welding range 91 from the metal components of the removed plating layer. Alignment of the sheet metal W1 is then performed using the formed protrusions 93, and the sheet metal W1 and the sheet metal W2 are welded. In this way, the sheet metal welding process according to this embodiment is completed.

### [Effects of First Embodiment]

As described in detail above, in the sheet metal welding method according to the first embodiment, cutting positions for cutting the sheet metal are acquired from the processing program, a welding cutting position that is a cutting position to be welded is identified from among the acquired cutting positions, an irradiation region where a laser beam is irradiated from the laser processing machine 100 is set on both sides of the identified welding cutting position, the plating layer is removed by irradiating the set irradiation region with the laser beam, the sheet metal is cut out from the base material by irradiating the cutting positions with the laser beam, and the cut-out sheet metal is welded. As a result, since the plating layers on both sides of the cutting positions to be welded are removed in advance, it is possible to prevent the metal components of the plating layer melted at the time of cutting from flowing onto the cut surface. Therefore, even when a plated steel sheet is cut and the cut surfaces are welded, welding quality can be improved.

In particular, when welding a material with a thick plating layer such as zinc, welding quality deteriorates due to the occurrence of pits, blowholes, or the like, but in this embodiment, since welding is performed after the plating layer is removed, welding quality can be improved. Furthermore, compared to a case where the metal components of the plating layer that flowed to the cut surface were removed with a grinder or a laser cleaning device, the working time can be significantly reduced.

In the sheet metal welding method according to the first embodiment, an irradiation region of a predetermined width is set on both sides of the welding cutting position. As a result, the plating layer of a predetermined width on both sides of the cutting position to be welded can be removed, so it is possible to prevent the metal components of the plating layer melted at the time of cutting from flowing onto the cut surface. Therefore, even when a plated steel sheet is cut and the cut surface is welded, welding quality can be improved.

Furthermore, in the sheet metal welding method according to the first embodiment, the welding range where welding is performed on the surface of the sheet metal in contact with the welding cutting position is acquired from the processing program, the irradiation region is set in the acquired welding range, and the irradiation region of a predetermined width is set on the opposite side of the welding cutting position from the welding range. As a result, even when welding is performed on the surface of the sheet metal in contact with the welding cutting position, the plating layer in the welding range can be removed, thereby improving welding quality.

In the sheet metal welding method according to the first embodiment, the predetermined width of the irradiation region is set to be equal to or greater than the beam diameter of the laser beam during laser cutting. As a result, the plating layer can be removed to a width equal to or greater than the beam diameter during laser cutting from the cutting position to be welded, so it is possible to prevent the metal components of the plating layer melted at the time of cutting from flowing onto the cut surface. Therefore, even when a plated steel sheet is cut and the cut surface is welded, welding quality can be improved.

Furthermore, in the sheet metal welding method according to the first embodiment, the plating layer is removed by vibrating the laser beam at a predetermined vibration width and vibrating the beam spot formed on the surface of the sheet metal W in the direction perpendicular to the traveling direction of the laser beam. As a result, the plating layer can be easily removed using the galvano scanner unit 32, so working time can be reduced.

Furthermore, in the sheet metal welding method according to the first embodiment, the plating layer is removed by vibrating the laser beam at a predetermined vibration width, and vibrating the beam spot formed on the surface of the sheet metal W to draw a semicircle in the traveling direction of the laser beam. As a result, the metal components of the removed plating layer can be blown off rearward with respect to the traveling direction D1 of the laser beam, so the amount of metal components adhering to the sheet metal can be reduced.

Furthermore, in the sheet metal welding method according to the first embodiment, the plating layer is removed by irradiating the irradiation region set in the welding range 91 with a laser beam, protrusions 93 are formed around the welding range 91 from the metal components of the removed plating layer, the sheet metal W1 is aligned using the formed protrusions 93, and the sheet metal W1 and the sheet metal W2 are welded. As a result, the metal components removed from the plating layer can be used for alignment of the sheet metal W1, so precise alignment can be performed even for joints where alignment is difficult, such as half-open welding.

### [Second Embodiment]

Hereinafter, a processing program creation method according to a second embodiment will be described with reference to the drawings. In the description of the drawings, the same reference signs are assigned to the same parts and detailed descriptions are omitted. In the second embodiment, a processing program used in the laser processing machine 100 described in the first embodiment is created.

### [Configuration of Laser Processing Machine]

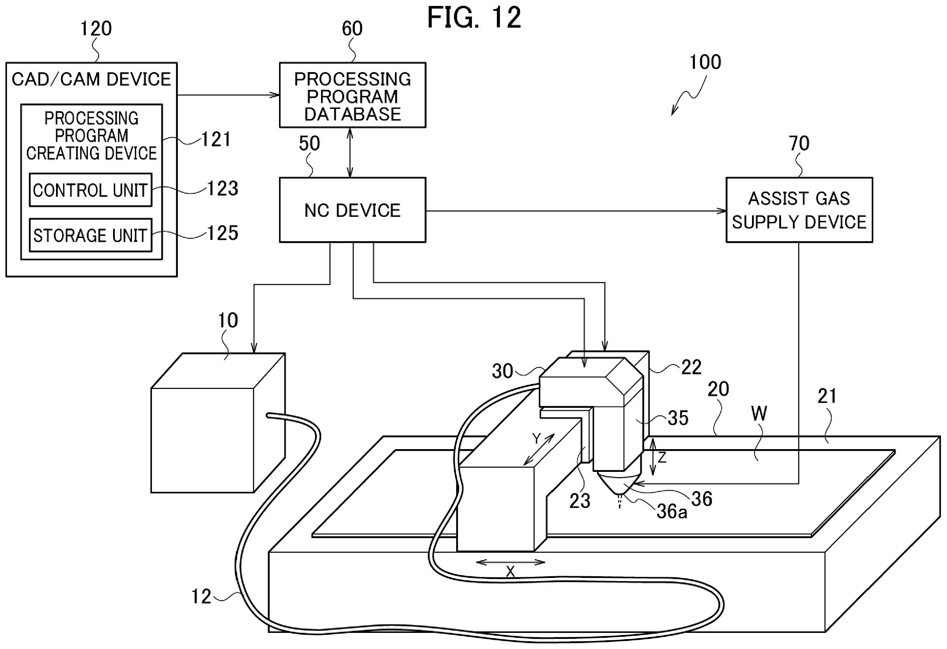

FIG. 12 is a diagram illustrating an overall configuration of a laser processing machine used in the processing program creation method according to the second embodiment. In the second embodiment, the laser processing machine 100 further includes a CAD/CAM (Computer Aided Design/Computer Aided Manufacturing) device 120, which differs from the laser processing machine 100 of the first embodiment. The CAD/CAM device 120 may be a component external to the laser processing machine 100. In this case, the CAD/CAM device 120 may be connected to the laser processing machine 100 via a network.

The CAD/CAM device 120 is a device that takes in CAD data of the sheet metal to be laser-processed and creates the development drawing and processing program necessary to execute the laser processing. In particular, in this embodiment, the CAD/CAM device 120 functions as a processing program creation device 121 that creates a processing program. The processing program creation device 121 is a device that creates a processing program for cutting out and welding a sheet metal from a base material on which a plating layer has been formed, and includes a control unit 123 and a storage unit 125.

The control unit 123 executes a process of creating a processing program from three-dimensional CAD data. Specifically, the control unit 123 acquires design data of a product formed of a sheet metal cut out from a base material on which a plating layer has been formed, and identifies, from among edge portions of the product, a welding edge portion to be welded based on the acquired design data. The control unit 123 then sets, in contact with cut surfaces of a plurality of the sheet metals joined at the identified welding edge portion, a plating removal region for removing the plating layer, generates a development drawing of the sheet metal with the plating removal region set therein, and creates a processing program based on the generated development drawing.

The storage unit 125 is a memory or database that stores data necessary for executing a process of creating a processing program, and stores, for example, three-dimensional CAD data imported from outside, the generated development drawing, the created processing program, and the like.

The processing program creation device 121 is configured by a computer including a memory, a processor such as a CPU (Central Processing Unit), and various interfaces. The memory and the various interfaces are connected to the processor via a bus. By executing a program stored in the memory by the processor, the processing program creation device 121 executes the process of creating the processing program.

### [Processing Program Creation Method]

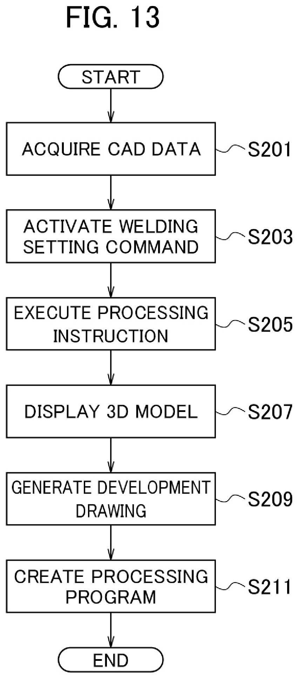

Hereinafter, the processing program creation method according to the second embodiment will be described with reference to FIG. 13. FIG. 13 is a flowchart illustrating the processing procedure of the processing program creation process. As illustrated in FIG. 13, in step S201, the control unit 123 acquires three-dimensional CAD data as design data of a product formed of a sheet metal cut out from a base material on which a plating layer has been formed. For example, the three-dimensional CAD data of the box 80 in FIG. 6 described in the first embodiment is acquired.

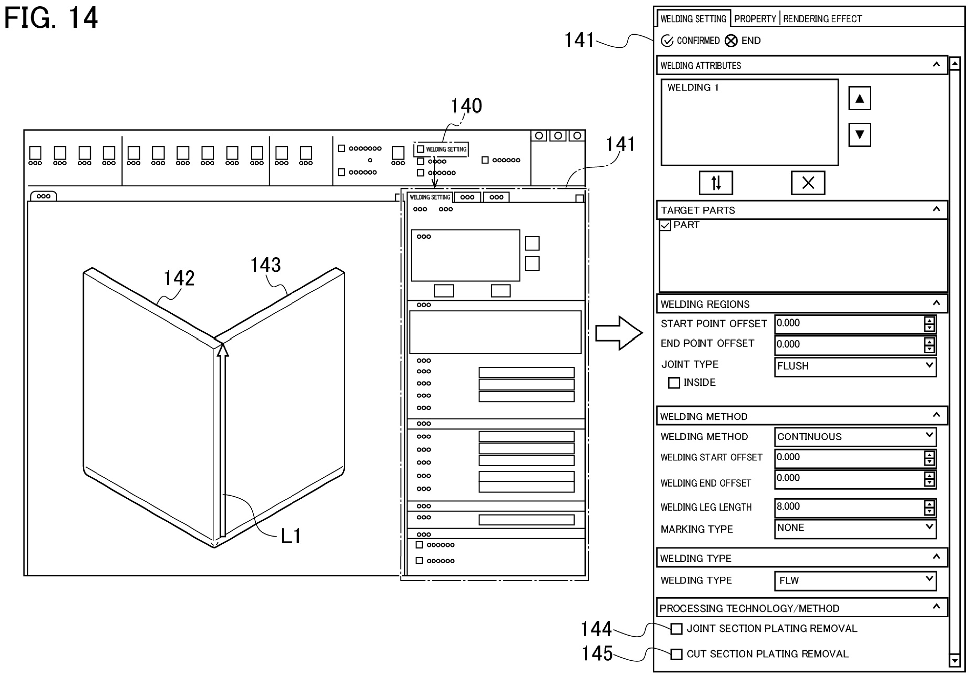

In step S203, the control unit 123 activates the "Welding Setting" command. For example, as illustrated in FIG. 14, when a user presses the command button 140 for "Welding Setting" on the screen of the CAD/CAM device 120, the control unit 123 displays an operation screen 141 for the "Welding Setting". When the user selects "Weld 1" from the welding attributes on the operation screen 141, an edge portion where the weld line L1 is set is displayed in enlarged form. Flanges 142 and 143 joined at the edge portion are parts of the sheet metals.

The control unit 123 determines that the portion where the flange 142 and the flange 143 are joined is the welding portion, based on the joined state of the flange 142 and the flange 143 recorded in the three-dimensional CAD data acquired in step S201. That is, the control unit 123 identifies, from among the edge portions of the product, the edge portion to be welded as the welding edge portion, based on the design data. As a result, the control unit 123 displays the weld line L1 at the identified welding edge portion.

In step S205, the control unit 123 executes the processing instruction input by the user. For example, when the user selects "Weld 1" on the operation screen 141, the parameters of the weld line L1 can be specified from the operation screen 141. As parameters, for example, in addition to the offset amount of the start point or end point and the type of joint, continuous welding or intermittent welding can be specified as the welding method. Furthermore, fiber laser welding, arc welding, or the like can be specified as the welding type.

Furthermore, the user selects a checkbox 144 for [Joint section Plating Removal] and a checkbox 145 for [Cut Section Plating Removal] from the [Processing Technology/Method] field on the operation screen 141. As a result, the control unit 123 sets a plating removal region on the sheet metal. The plating removal region is a region where the plating layer formed on the sheet metal is removed. The plating removal region includes a cut section plating removal region that is set so that the metal components of the plating layer melted when cutting out the sheet metal do not flow onto the cut surface, and a joint section plating removal region that is set on the surface portion of the sheet metal to which the cut surface of the sheet metal is joined.

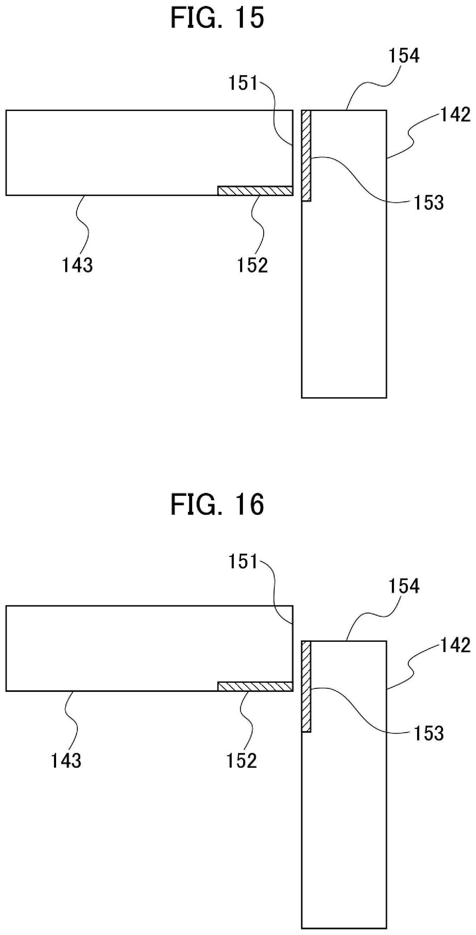

First, the control unit 123 determines the type of joint between the flange 142 and the flange 143 based on the three-dimensional CAD data acquired in step S201. For example, FIG. 15 is a diagram illustrating the welding portion of the flange 142 and the flange 143 illustrated in FIG. 14 from above. As illustrated in FIG. 15, since the entire cut surface 151 of the flange 143 is joined to the flange 142, the control unit 123 determines that the type of joint is a flush corner joint.

When the type of joint is determined, the control unit 123 sets a plating removal region in contact with the cut surfaces of the flange 142 and the flange 143 joined at the identified welding edge portion. At this time, the control unit 123 sets the cut section plating removal region and the joint section plating removal region based on the joined state of the flange 142 and the flange 143 joined at the welding edge portion.

For example, as illustrated in FIG. 15, since the cut surface 151 of the flange 143 is joined to the surface of the flange 142, based on this joined state, the control unit 123 sets a cut section plating removal region 152 and a joint section plating removal region 153.

As a result, the cut section plating removal region 152 is set in contact with the cut surface 151 so that the metal components of the plating layer melted when cutting out the sheet metal do not flow onto the cut surface 151. The cut section plating removal region 152 corresponds to the irradiation region E1 illustrated in FIG. 5 of the first embodiment.

The joint section plating removal region 153 is set in contact with the cut surface 154 on the surface portion of the flange 142 to which the cut surface 151 of the flange 143 is joined. The joint section plating removal region 153 corresponds to the irradiation region E2 illustrated in FIG. 8 of the first embodiment.

Note that the joint may be a half-open corner joint, as illustrated in FIG. 16, in which half of the cut surface 151 of the flange 143 is joined to the flange 142. In this case, as illustrated in FIG. 16, the cut section plating removal region 152 and the joint section plating removal region 153 are set. However, the width of the joint section plating removal region 153 may be narrower than in the case of the flush corner joint.

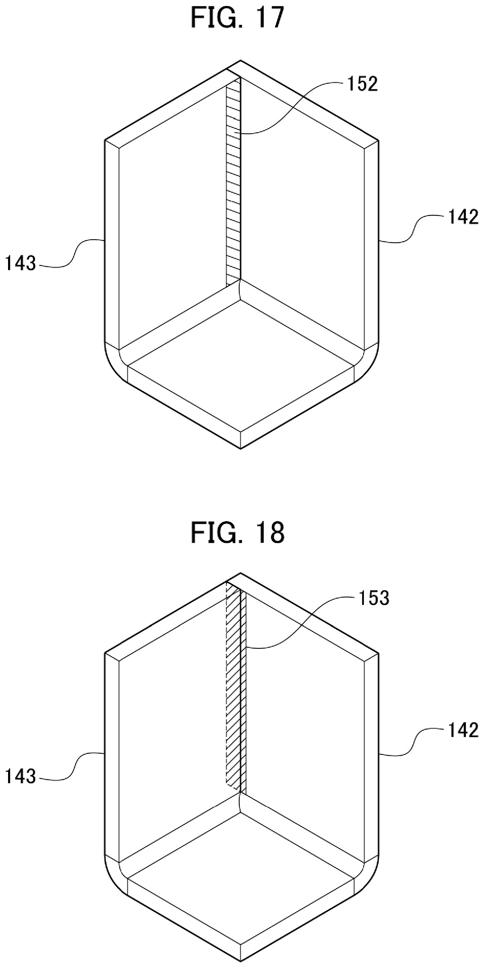

In step S207, the control unit 123 displays a 3D model reflecting the processing instruction executed in step S205. For example, as illustrated in FIG. 17, in the product shape of the 3D model, the cut section plating removal region 152 is set on the flange 143 and displayed, and as illustrated in FIG. 18, the joint section plating removal region 153 is set on the flange 142 and displayed. In this case, if parameters are specified on the operation screen 141, the 3D model is displayed according to the specified parameters.

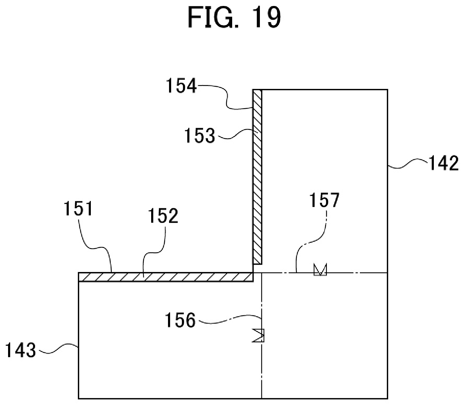

In step S209, the control unit 123 generates a development drawing when a development drawing creation instruction is input by the user who has checked the 3D model displayed in step S207. For example, from the 3D model illustrated in FIGS. 17 and 18, the development drawing illustrated in FIG. 19 is generated. In FIG. 19, the cut section plating removal region 152 is set along the cut surface 151 of the flange 143, the joint section plating removal region 153 is set along the cut surface 154 of the flange 142, and bend lines 156 and 157 for bending in the bending process are also set. In this way, the processing instructions are reflected and the development drawing of the sheet metal with the plating removal regions set therein is generated.

In step S211, the control unit 123 creates, based on the development drawing generated in step S209, a processing program for cutting out and welding the sheet metal from the base material on which the plating layer has been formed, and the processing program creation process according to this embodiment ends. The created processing program is output to the processing program database 60, and the NC device 50 reads the processing program and executes the sheet metal welding process described in the first embodiment.

### [Effects of Second Embodiment]

As described in detail above, in the processing program creation method according to the second embodiment, design data of a product formed of a sheet metal cut out from a base material on which a plating layer has been formed is acquired, a welding edge portion is identified from among edge portions of the product based on the design data, a plating removal region is set in contact with the cut surfaces of a plurality of sheet metals joined at the welding edge portion, a development drawing of the sheet metal with the plating removal region set therein is generated, and a processing program for cutting out and welding the sheet metal from the base material is created based on the generated development drawing. As a result, even if the user does not manually specify the region where the plating layer is to be removed, a processing program with the plating removal region set therein can be created, so work efficiency can be improved.

In particular, conventionally, users could not specify the region where the plating layer is to be removed unless they imagined the three-dimensional shape of the product from the development drawing and calculated coordinates while also considering the positions of other related parts. However, in the processing program creation method according to the second embodiment, based on three-dimensional CAD data, the edge portion to be welded is identified from among the edge portions of the product, and the plating removal region is set in contact with a plurality of cut surfaces joined at the edge portion to be welded. Therefore, a processing program with the region where the plating layer is to be removed set therein is created without the user having to perform troublesome work, so work efficiency can be improved.

Furthermore, in the processing program creation method according to the second embodiment, the plating removal region includes the cut section plating removal region 152 that is set so that the metal components of the plating layer melted when cutting out the sheet metal do not flow onto the cut surface, and the joint section plating removal region 153 that is set on the surface portion of the sheet metal to which the cut surface of the sheet metal is joined. The cut section plating removal region 152 and the joint section plating removal region 153 are then set based on the joined state of the plurality of sheet metals joined at the welding edge portion. As a result, it is possible to easily create a processing program that can prevent the metal components of the plating layer from flowing onto the cut surface and can also remove the plating layer from the portion where the cut surface of the sheet metal is joined.

As described above, the embodiments of the present disclosure have been described, but the statements and drawings forming a part of this disclosure should not be understood as limiting the disclosure. Various alternative embodiments, examples, and operational techniques will become apparent to those skilled in the art from the disclosure.

The disclosure of the present application is related to the subject matter described in Japanese Patent Application No. 2024-178839, filed on October 11, 2024, the entire disclosure of which is incorporated herein by reference.

## Claims

1. A sheet metal welding method comprising:
acquiring a processing program for cutting out and welding a sheet metal from a base material on which a plating layer has been formed;
acquiring cutting positions for cutting the sheet metal from the acquired processing program;
identifying, from among the acquired cutting positions, a welding cutting position that is a cutting position to be welded;
setting, on both sides of the identified welding cutting position, an irradiation region where a laser beam is irradiated from a laser processing machine;
removing the plating layer by irradiating the set irradiation region with the laser beam;
cutting out the sheet metal from the base material by irradiating the cutting positions with the laser beam; and
welding the cut-out sheet metal.

2. The sheet metal welding method according to claim 1, further comprising setting the irradiation region of a predetermined width on both sides of the welding cutting position.

3. The sheet metal welding method according to claim 1, further comprising:
acquiring, from the processing program, a welding range in contact with the welding cutting position and where welding is performed on a surface of the sheet metal;
setting the irradiation region in the acquired welding range; and
setting the irradiation region of a predetermined width on the opposite side of the welding cutting position from the welding range.

4. The sheet metal welding method according to claim 2 or 3, wherein the predetermined width is set to be equal to or greater than a beam diameter of the laser beam during laser cutting.

5. The sheet metal welding method according to any one of claims 1 to 3, wherein the plating layer is removed by vibrating the laser beam at a predetermined vibration width, and vibrating a beam spot formed on the surface of the sheet metal in a direction perpendicular to a traveling direction of the laser beam.

6. The sheet metal welding method according to any one of claims 1 to 3, wherein the plating layer is removed by vibrating the laser beam at a predetermined vibration width, and vibrating a beam spot formed on the surface of the sheet metal to draw a semicircle in a traveling direction of the laser beam.

7. The sheet metal welding method according to claim 3, further comprising:
removing the plating layer by irradiating the irradiation region set in the welding range with the laser beam;
forming protrusions around the welding range from metal components of the removed plating layer; and
aligning the sheet metal using the formed protrusions and welding the sheet metal.

8. A processing program creation method, comprising:
acquiring design data of a product formed of a sheet metal cut out from a base material on which a plating layer has been formed;
identifying, from among edge portions of the product, a welding edge portion to be welded based on the design data;
setting, in contact with cut surfaces of a plurality of the sheet metals joined at the identified welding edge portion, a plating removal region for removing the plating layer;
generating a development drawing of the sheet metal with the plating removal region set therein; and
creating a processing program for cutting out and welding the sheet metal from the base material based on the generated development drawing.

9. The processing program creation method according to claim 8, wherein
the plating removal region includes a cut section plating removal region that is set so that metal components of the plating layer melted when cutting out the sheet metal do not flow onto a cut surface, and a joint section plating removal region that is set on a surface portion of the sheet metal to which the cut surface of the sheet metal is joined, and
the cut section plating removal region and the joint section plating removal region are set based on a joined state of the plurality of the sheet metals joined at the welding edge portion.

10. A processing program creation device configured to:
acquire design data of a product formed of a sheet metal cut out from a base material on which a plating layer has been formed;
identify, from among edge portions of the product, a welding edge portion to be welded based on the design data;
set, in contact with cut surfaces of a plurality of the sheet metals joined at the identified welding edge portion, a plating removal region for removing the plating layer;
generate a development drawing of the sheet metal with the plating removal region set therein; and
create a processing program for cutting out and welding the sheet metal from the base material based on the generated development drawing.

11. The processing program creation device according to claim 10, wherein
the plating removal region includes a cut section plating removal region that is set so that metal components of the plating layer melted when cutting out the sheet metal do not flow onto a cut surface, and a joint section plating removal region that is set on a surface portion of the sheet metal to which the cut surface of the sheet metal is joined, and
the cut section plating removal region and the joint section plating removal region are set based on a joined state of the plurality of the sheet metals joined at the welding edge portion.
